# EUROPÄISCHE PATENTSCHRIFT

(11) **EP 0 760 192 B1**
(45) Veröffentlichungstag und Bekanntmachung des Hinweises auf die Patenterteilung: **09.09.1998**
(21) Anmeldenummer: 95917909.4
(22) Anmeldetag: 15.05.1995
(51) Int. Cl.: H04Q 7/38

(54) **VERFAHREN ZUR TEILNEHMERDATENÜBERTRAGUNG BEI EINEM WECHSEL DES FUNKKOMMUNIKATIONSSYSTEMS**
PROCESS FOR SUBSCRIBER DATA TRANSMISSION WHEN CHANGING THE RADIOCOMMUNICATION SYSTEM
PROCEDE POUR LA TRANSMISSION D'INFORMATIONS ENTRE DES ABONNES LORS D'UN CHANGEMENT DE SYSTEME DE RADIOCOMMUNICATION

(30) Priorität: 20.05.1994 DE 4417779
(43) Veröffentlichungstag der Anmeldung: 05.03.1997
(73) Patentinhaber: SIEMENS AKTIENGESELLSCHAFT, 80333 München (DE)
(72) Erfinder: REININGHAUS, Georg, A-1130 Wien (AT)
(86) Internationale Anmeldenummer: DE9500641
(87) Internationale Veröffentlichungsnummer: WO9532592

(56) Entgegenhaltungen:
- EP-A- 0 037 069
- WO-A-95/01069
- GLOBECOM, Bd. 3, 29.November 1993 HOUSTON, US , Seiten 1944-1949, XP 000436146 SAWADA ET AL. 'Inter-Network Roaming Based on Personal Digital Cellular Standarts '
- INTERNATIONAL CONFERENCE ON COMMUNICATIONS, Bd. 2, 23.Mai 1993 - 26.Mai 1993 GENEVA, CH, Seiten 1252-1256, XP 000371272 MAASS ET AL. 'Directory Services for Mobility Management in Private Telecommunication Networks '

## Beschreibung

Die Erfindung betrifft ein Mobilfunksystem mit mindestens zwei Mobilfunkgebieten.

Entsprechend internationaler Standards sind Mobilfunksysteme mit offenen Schnittstellen verfügbar, die eine Kombination von funktionalen Einrichtungen - Vermittlungsstellen, Daten-banken, Funkeinrichtungen, usw. - verschiedener Hersteller erlauben. Durch eine einheitliche Luftschnittstelle zur drahtlosen Verbindung von Mobilstationen mobiler Teilnehmer mit Basisstationssytemen kann überall im Mobilfunksystem mit ein- und derselben Mobilstation abgehend und ankommend telefoniert werden. Voraussetzung für ein derartiges Mobilfunksystem ist ein durchgehend kompatibles System von Signalisierungsverbindungen, um Steuerungsinformationen und Daten - als Oberbegriff für alle im Mobilfunksystem übertragbaren Nachrichtensignale wie Sprachsignale, Datensignale usw. - zwischen den funktionalen Einrichtungen des Systems übertragen zu können.

Auf Grund der für Europa geltenden internationalen Standardisierung werden in einem GSM-Mobilfunksystem (Global System for Mobile Communication) für diese Signalisierungsverbindungen beispielsweise Signalisierungsprotokolle nach dem "Zentralen Zeichengabesystem Nr. 7 (CCS7)" verwendet. Entspechende Standars sind auch in den USA und anderen Ländern und Kontinenten verfügbar.In einem Mobilfunksystem mit mindestens zwei Mobilfunkgebieten - z.B. Europa und USA - ist es folglich möglich, daß zueinander inkompatible Signalisierungsprotokolle bestehen. Die in den verschiedenen Mobilfunkgebieten existierenden Mobilfunksysteme sind dagegen kompatibel zueinander, d.h. daß ähnliche Teilnehmerdaten zur Kennzeichnung der mobilen Teilnehmer und entsprechende Teilnehmerdienste bestehen.

Am Beispiel der "Roaming-Funktion" im Mobilfunksystem wird das Problem nicht kompatibler Signalisierungsprotokolle aufgezeigt. Angenommen, eine von einer Sende/Empfangsstation eines in einem ersten Mobilfunkgebiet angeordneten Basisstationssystems betreute Mobilstation kommt in den Bereich einer Sende/Empfangsstation eines neuen Basisstationssystems in einem zweiten Mobilfunkgebiet ("roaming"), so müßten bei Aufnahme eines Funkkontakts im neuen Gebiet die der Mobilstation zugeordneten Teilnehmerdaten von dem Heimatregister des ersten Mobilfunkgebiets an das mit dem neuen Basisstationssystem verbundene Besucherregister des zweiten Mobilfunkgebiets gesendet und dort abgespeichert werden. Die im zuletzt zuständigen Besucherregister des ersten Mobilfunkgebiets gespeicherten Teilnehmerdaten werden gelöscht und die Adresse des neuen Besucherregisters im Heimatregister gespeichert. Zur Durchführung dieser Datenoperationen bedürfte es einer Umsetzung von einem Signalisierungsprotokoll auf das andere. Der mobile Teilnehmer einschließlich seiner Mobilstation ist mit den zugehörigen Teilnehmerdaten immer nur in einem Heimatregister und zu jeder Zeit immer nur in einem einzigen, aktuell für den mobilen Teilnehmer zuständigen Besucherregister eingetragen.

Der Verbindungsaufbau und -abbau zwischen dem Heimatregister und dem jeweils betroffenen Besucherregister und der Austausch der Daten und Steuerungsinformationen ist sehr komplex und erfordert ein mächtiges Signalisierungsprotokoll. Wenn, wie oben geschildert, die Register sich in mindestens zwei Mobilfunkgebieten mit zueinander inkompatiblen Signalisierungsprotokollen befinden, wäre eine Übersetzungsfunktion beim Übergang zwischen den Mobilfunkgebieten notwendig, oder die funktionalen Einrichtungen des Mobilfunksystems müßten selbst mehrere derartige Protokolle beherrschen. In jedem Fall erfordert eine derartige Realisierung eines Mobilfunksystems mit mehreren Mobilfunkgebieten, in denen inkompatible Signalisierungsprotokolle bestehen, bei einem Übertritt der Mobilstation von einem ersten Mobilfunkgebiet in ein zweites Mobilfunkgebiet einen hohen Aufwand.

Es ist die Aufgabe der vorliegenden Erfindung, ein Mobilfunksystem mit mindestens zwei Mobilfunkgebieten, in denen zueinander inkompatible Signalisierungsprotokolle bestehen, zu realisieren, bei dem die oben genannten Nachteile vermieden werden können.

Diese Aufgabe wird durch die Merkmale des Patentanspruchs 1 gelöst. Weiterbildungen der Erfindung sind in den Unteransprüchen angegeben.

Eine Übersetzungsfunktion zwischen den in den unterschiedlichen Mobilfunkgebieten existierenden Signalisierungsprotokollen entfällt, da bei Übertritt der Mobilstation des mobilen Teilnehmers von einem Ursprungs-Mobilfunkgebiet in ein Ziel-Mobilfunkgebiet die im alten Heimatregister gespeicherten Teilnehmerdaten zu einem im Ziel- Mobilfunkgebiet vorhandenen neuen Heimatregister übertragen werden. Der in das Ziel-Mobilfunkgebiet übergetretene mobile Teilnehmer wird dann von dem dort ansäßigen Heimatregister bedient. Es findet folglich beim "Roaming" des mobilen Teilnehmers zwischen den Mobilfunkgebieten ein Heimatregister-Wechsel statt, der in Kombination mit der beibehaltenen Methode des Besucherregister-Wechsels innerhalb eines Mobilfunkgebiets ein sehr flexibles Mobilfunksystem ergibt. Da es sich bei den Mobilfunkgebieten mit zugehörigen Signalisierungsprotokollen in der Regel um weit entfernte Länder oder sogar Kontinente handelt - wie beispielsweise Europa und USA - ist der Heimatregister-Wechsel in seiner zeitlichen Dauer unkritisch. Innerhalb eines Mobilfunkgebiets wird daher der Besucherregister-Wechsel in Echtzeit beibehalten.

Von Vorteil ist es, wenn die in den verschiedenen Mobilfunkgebieten angeordneten Heimatregister durch eine leitungs-oder eine paketvermittelte Verbindung - z.B. eine Paketdatenverbindung X.25 - oder durch eine Signalisierungsverbindung miteinander kommunizieren. Ein Echtzeitbetrieb auf der Verbindung zwischen den Heimatregistern ist nicht erforderlich. Die Steuerungsbefehle zur Durchführung von Datenoperationen, wie sie zwischen dem Besucherregister und dem Heimatregister innerhalb eines Mobilfunkgebiets in herkömmlicher Weise bereits verwendet werden, können für die Kommunikation zwischen dem Heimatregister des Ursprungs-Mobilfunkgebiets und dem Heimatregister des Ziel-Mobilfunkgebiets übernommen werden. Beispiele für derartige Befehle sind "Daten eintragen", "Daten entfernen", "Löschung des kompletten Teilnehmerdatensatzes" usw..

Auch ist es gemäß einer Weiterbildung der Erfindung vorteilhaft, zum Anrufaufbau Rufnummern für den angerufenen mobilen Teilnehmer im Heimatregister des Ursprungs-Mobilfunkgebiets oder in den Heimatregistern der anderen Mobilfunkgebiete zu speichern, über die der Teilnehmer im Ziel-Mobilfunkgebiet erreichbar ist. Der Anruf kann dann je nach gewählter Rufnummer über das Ursprungs-Mobilfunkgebiet zum Ziel-Mobilfunkgebiet aufgebaut oder direkt zum angerufenen mobilen Teilnehmer im Ziel-Mobilfunkgebiet weitergeleitet werden.

Gemäß einer anderen Weiterbildung der Erfindung kann die Rufnummer des aktuellen Mobilfunkgebiets von dem Heimatregister des Ursprungs-Mobilfunkgebiets zu den Heimatregistern der anderen Mobilfunkgebiete übertragen und darin gespeichert werden, sodaß ein Anruf mit der von dem anrufenden Teilnehmer gewählten Rufnummer des nächstgelegenen Mobilfunkgebiets nach Abfrage des zugehörigen Heimatregisters direkt zum angerufenen mobilen Teilnehmer im aktuellen Mobilfunkgebiet aufgebaut wird.

Ein Ausführungsbeispiel der Erfindung wird anhand von Figuren erläutert.Im einzelnen zeigen
Figur 1 das Blockschaltbild eines digitalen Mobilfunksystems mit zwei Mobilfunkgebieten
Figur 2 eine Prinzipdarstellung der Datenoperationen zwischen den funktionalen Einrichtungen des Mobilfunksystems bei Übertritt eines mobilen Teilnehmers einschließlich seiner Mobilstation vom Ursprungs-Mobilfunkgebiet in das Ziel- Mobilfunkgebiet,
Figur 3 eine Prinzipdarstellung der Datenoperationen bei Änderung der Teilnehmerdaten des mobilen Teilnehmers und
Figur 4 eine Prinzipdarstellung der Datenoperationen für einen Verbindungsaufbau zum mobilen Teilnehmer auf Grund eines ankommenden Anrufs.

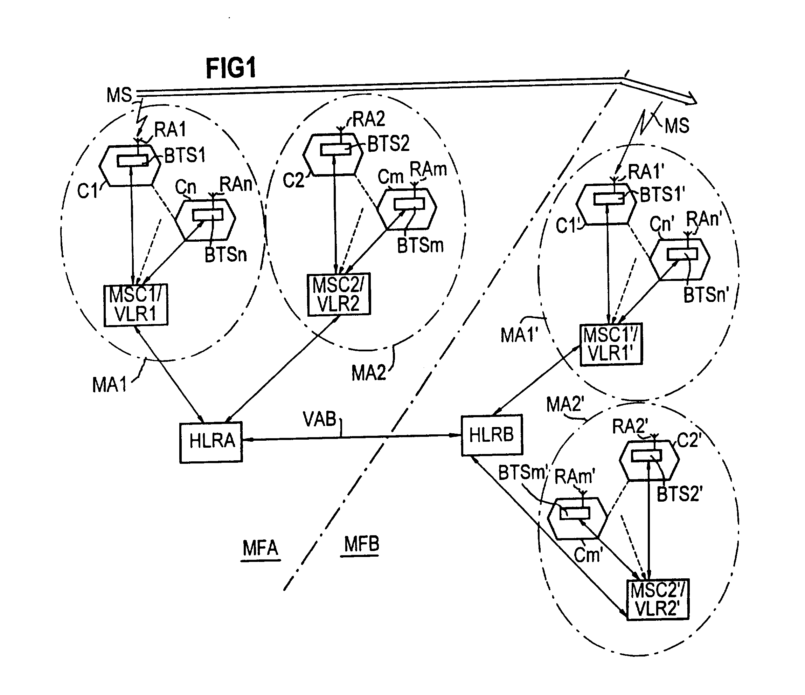

Figur 1 zeigt zwei Mobilfunkgebiete MFA und MFB, in denen beispielsweise zueinander kompatible digitale Mobilfunksysteme existieren, die inkompatible Signalisierungsprotokolle zur Übertragung von Daten und Steuerungsinformationen zwischen den funktionalen Einrichtungen des jeweiligen Mobilfunksystems benutzen. Dabei kann es sich bei dem Mobilfunksystem im Mobilfunkgebiet MFA um beispielsweise das für Europa genormte GSM-Mobilfunksystem (Global System for Mobile Communication) und im Mobilfunkgebiet MFB um ein in den USA verwendetes Mobilfunksystem ähnlicher oder gleicher Struktur handeln. Es ist auch möglich, daß die beiden Mobilfunkgebiete MFA und MFB Teile eines einzigen Mobilfunksystems umfassen, in denen zueinander inkompatible Signalisierungsprotokolle bestehen. Auch die Kombination eines analogen Mobilfunksystems im Mobilfunkgebiet MFA und eines digitalen Mobilfunksystems im Mobilfunkgebiet MFB ist realisierbar.

Das Mobilfunksystem im Mobilfunkgebiet MFA ist aus einer Vielzahl von Funkzellen aufgebaut. Ein derartiges digitales zellulares Mobilfunksystem nach dem GSM-Standard ist aus der Systembeschreibung "D900- Mobile Communication System", System Description SYD, 1992 (Bestellnr. A 30808-X3231-X-2-7618) oder aus der GSM-Empfehlung 09.02, Version 4.3.0 vom 2. April 1993 bekannt. Das Mobilfunksystem erstreckt sich über mehrere lokale Gebiete MA1, MA2..., die einander entsprechende Einrichtungen aufweisen.

Das lokale Gebiet MA1 ist von Funkzellen C1...Cn abgedeckt, in denen durch Funkeinrichtungen BTS1...BTSn - sogenannte Basis-Sende/Empfangsstationen - über Richtantennen RA1...RAn ein Funkkontakt mit einer Mobilstation MS des mobilen Teilnehmers möglich ist. Angenommen, der mobile Teilnehmer hält sich in der Funkzelle C1 auf, so kann ein Funkkontakt von der Mobilstation MS zu der ihn versorgenden nächstliegenden Richtantenne RA1 der Funkeinrichtung BTS1 über die Luftschnittstelle hergestellt werden. Das lokale Gebiet MA2 ist von Funkzellen C2...Cm abgedeckt, in denen Funkeinrichtungen BTS2...BTSm - ebenfalls Basis-Sende/Empfangsstationen - über Richtantennen RA2...RAm Kontakte zu den Mobilstationen herstellen. Alle Funkeinrichtungen BTS1...BTSn und BTS2...BTSm sind Bestandteil eines für das Mobilfunkgebiet MFA vorgesehenen Basisstationssystems, das als Verbindungselement zwischen dem Funkteil und dem verdrahteten Teil des Mobilfunksystems dient. Dabei sind mehrere Funkeinrichtungen im jeweiligen lokalen Gebiet MA1 oder MA2 jeweils mit einer von mehreren Basisstationssteuerungen (nicht dargestellt) des Basisstationssytems verbunden.

In jedem lokalen Gebiet MA1, MA2 ist ein Mobilvermittlungssystem MSC1, MSC2 angeordnet, das darin die Vermittlungsfunktionen übernimmt. Neben der Ausführung der Vermittlungsfunktionen beim Fernsprechen des mobilen Teilnehmers mit einem zweiten Teilnehmer stellt das jeweilige Mobilvermittlungssystem MSC1, MSC2 darüberhinaus dem mobilen Teilnehmer eine Reihe von Diensten und Zusatzdiensten zur Verfügung. Die Funkeinrichtungen BTS1...BTSn sind mit dem Mobilvermittlungssystem MSC1 und die Funkeinrichtungen BTS2...BTSm mit dem Mobilvermittlungssystem MSC2 verbunden. Vom jeweiligen Mobilvermittlungssystem MSC1, MSC2 besteht auch eine Verbindung zu anderen Netzen, wie z.B. dem öffentlichen Fernsprechnetz oder einem anderen Mobilfunknetz.

An das jeweilige Mobilvermittlungssystem MSC1, MSC2 ist ein Besucherregister VLR1, VLR2 zur Speicherung aller Informationen über die in seinem Zuständigkeitsbereich befindlichen mobilen Teilnehmer angeschlossen. Das Besucherregister VLR1 bzw. VLR2 kann als dynamische Teilnehmerdatenbank betrachtet werden, deren gespeicherte Informationen, bedingt durch den Wechsel der mobilen Teilnehmer von dem oder in den Zuständigkeitsbereich eines anderen Besucherregisters, laufend auf den neuesten Stand gebracht werden. Außer den dargestellten lokalen Gebieten MA1, MA2 sind im Mobilfunkgebiet MFA weitere lokale Gebiete vorhanden, in denen ebenfalls jeweils ein eigenes Mobilvermittlungssystem und ein zugehöriges Besucherregister vorgesehen sind.

Die im Besucherregister VLR1... gespeicherten Informationen können über mindestens ein Heimatregister HLRA aktualisiert werden. Das Heimatregister HLRA sendet zum jeweiligen Besucherregister VLR1, VLR2 alle zur Unterstützung des jeweiligen Dienstes erforderlichen Daten. Die für jeden mobilen Teilnehmer im Heimatregister HLRA gespeicherten kennzeichnenden Informationen enthalten unter anderem seine Zugangs fähigkeit zum Mobilfunksystem, seine abonnierten Dienste und Zusatzdienste. Die Mobilstation MS und die Daten ihres mobilen Teilnehmers sind somit im Heimatregister HLRA und zu jedem Zeitpunkt nur in einem einzigen der Besucherregister VLR1... registriert. Alle Besucherregister VLR1... der lokalen Gebiete MA1... sind mit dem Heimatregister HLRA im Mobilfunkgebiet MFA verbunden.

Wenn innerhalb des Mobilfunkgebiets MFA die Mobilstation MS bzw. ihr mobiler Teilnehmer vom Bereich der Funkeinrichtung BTS1 der Funkzelle C1 des lokalen Gebiets MA1 in den Bereich einer neuen Funkeinrichtung BTS2 der Funkzelle C2 des lokalen Gebiets MA2 kommt, werden die Teilnehmerdaten vom Heimatregister HLRA zum aktuell zuständigen Besucherregister VLR2 gesendet und darin gespeichert. Die im bisher aktuellen Besucherregister VLR1 gespeicherten Teilnehmerdaten werden gelöscht und die Adresse des neuen Besucherregisters VLR2 im Heimatregister HLRA eingetragen. Auf diese Weise ist die Mobilstation MS nach einem Übergang von der Funkzelle C1 in die neue Funkzelle C2 ("Roaming") im zuständigen neuen Besucherregister VLR2 registriert, so daß vom mobilen Teilnehmer abgehende und beim mobilen Teilnehmer ankommende Anrufe über das neue Besucherregister VLR2 und das im lokalen Gebiet MA2 zuständige Mobilvermittlungssytem MSC2 abgewickelt werden. Die oben geschilderte "Roaming"-Funktion steht auch den anderen Mobilstationen im Mobilfunkgebiet MFA zur Verfügung. Für den Verbindungsaufbau und -abbau zwischen dem Heimatregister HLRA und jeweils einem der Besucherregister VLR1... wird ein standardisiertes Signalisierungsprotokoll - z.B. das gemäß dem Zentralen Zeichengabesystem No. 7 (CCS7) - verwendet.

Es sei angenommen, daß im Mobilfunkgebiet MFB ebenfalls ein zellular aufgebautes digitales Mobilfunksystem existiert, das sich von dem für Europa standardisierten GSM-Mobilfunksystem im Mobilfunkgebiet MFA bezüglich des Signalisierungsprotokolls unterscheidet. Das im Mobilfunkgebiet MFB bestehende Mobilfunksystem ist jedoch kompatibel zum GSM-Mobilfunksystem im Mobilfunkgebiet MFA, d.h. die Struktur der Teilnehmerdaten und die den mobilen Teilnehmern angebotenen Teilnehmerdienste sind nahezu oder vollständig identisch.

Das Mobilfunkgebiet MFB wird flächendeckend von lokalen Gebieten MA1', MA2'...versorgt, in denen sich jeweils Funkzellen C1' Cn', C2'...Cm' befinden. Die Funkzellen C1'...Cn' und C2'...Cm' weisen Funkeinrichtungen BTS1'...BTSn' und BTS2'...BTSm' auf, an die Richtantennen RA1'...RAn' und RA2'...RAm' angeschlossen sind. Im lokalen Gebiet MA1' sind ein Mobilvermittlungssystem MSC1' und ein Besucherregister VLR1' mit den Funkeinrichtungen BTS1'...BTSn' verbunden, während im lokalen Gebiet MA2' ein Mobilvermittlungssystem MSC2' und ein Besucherregister VLR2' mit den Funkeinrichtungen BTS2'...BTSm' verdrahtet sind. Die Verwendung der vom Mobilfunksystem nach dem GSM-Standard im Mobilfunkgebiet MFA übernommenen Bezeichnungen für die Einrichtungen in den lokalen Gebieten MA1'... des Mobilfunkgebiets MFB soll lediglich zum Ausdruck bringen, daß im Mobilfunkgebiet MFB und im Mobilfunkgebiet MFA einander entsprechende funktechnische Einrichtungen, Vermittlungseinrichtungen und Speichereinrichtungen angeordnet sind. Sie brauchen jedoch nicht identisch zu sein.

Ebenso wie im Mobilfunkgebiet MFA ist im Mobilfunkgebiet MFB mindestens ein Heimatregister HLRB angeordnet, das mit jedem Besucherregister VLR1', VLR2'... in den lokalen Gebieten MA1', MA2'...... verbunden ist. Zum Verbindungsaufbau und - abbau zwischen dem Heimatregister HLRB und einem der Besucherregister VLR1'... wird ein Signalisierungsprotokoll benutzt, das sich von dem Signalisierungsprotokoll im Mobilfunkgebiet MFA unterscheidet. Dies bedeutet, daß auch bei mehr als zwei Mobilfunkgebieten mit jeweils eigenen Signalisierungsprotokollen ein eigenes Heimatregister pro Mobilfunkgebiet vorgesehen ist.

Wenn der mobile Teilnehmer mit seiner Mobilstation MS nicht nur seine aktuelle Funkzelle C1 innerhalb des Mobilfunkgebiets MFA verläßt, sondern in das neue Mobilfunkgebiet MFB übertritt ("Roamed"), werden die im Heimatregister HLRA des Ursprungs-Mobilfunkgebiets MFA gespeicherten Teilnehmerdaten zum Heimatregister HLRB des Ziel-Mobilfunkgebiets MFB gesendet und darin gespeichert. Damit kann auf einfache Weise eine aufwandsträchtige Umsetzung des im Ursprungs-Mobilfunkgebiets MFA geltenden Signalisierungsprotokolls auf das im Ziel-Mobilfunkgebiet MFB verwendete Signalisierungsprotokoll vermieden werden. Zwischen dem Heimatregister HLRA des Ursprungs-Mobilfunkgebiets MFA und dem Heimatregister HLRB des Ziel-Mobilfunkgebiets verläuft eine Verbindung VAB, die beispielsweise von einer paketvermittelten X.25-Datenverbindung gebildet wird und auf der ein Echtzeitbetieb nicht erforderlich ist. Demgegenüber werden die Echtzeitbedingungen bei einem Besucherregisterwechsel für den Fall eines Übertritts des mobilen Teilnehmers einschließlich seiner Mobilstation MS von der Funkzelle C1 zur Funkzelle C2 innerhalb ein- und desselben Mobilfunkgebiets MFA eingehalten. Dasselbe gilt im Mobilfunkgebiet MFB.

Nach der Übertragung der Teilnehmerdaten zum Heimatregister HLRB des Ziel-Mobilfunkgebiets MFB werden die im Besucherregister VLR1 des Ursprungs-Mobilfunkgebiets MFA gespeicherten Teilnehmerdaten gelöscht. Darüberhinaus wird die neue Rufnummer, unter der der mobile Teilnehmer im Ziel-Mobilfunkgebiet MFB erreichbar ist, im Heimatregister HLRA des Ursprungs-Mobilfunkgebiets MFA als aktiv gekennzeichnet, während die ursprüngliche Rufnummer, unter der der mobile Teilnehmer im Ursprungs-Mobilfunkgebiet MFA erreichbar war, inaktiv gesetzt wird. Die Mobilstation MS und die zugehörigen Teilnehmerdaten sind somit im neuen Mobilfunkgebiet MFB in dessen Heimatregister HLRB registriert. Nimmt die Mobilstation MS beispielsweise in der Funkzelle C1' des Ziel-Mobilfunkgebiets MFB über die Richtantenne RA1' mit der Funkeinrichtung BTS1' Funkkontakt auf, ermittelt das Besucherregister VLR1' anhand der Identifikation der Mobilstation MS die Adresse des aktuellen Heimatregisters HLRB und fordert von dort die Teilnehmerdaten für den Verbindungsaufbau im Mobilvermittlungssystem MSC1' an. Die Adresse des Besucherregisters VLR1' wird im neuen Heimatregister HLRB gespeichert.

Will der mobile Teilnehmer mit seiner Mobilstation MS zu einem weiteren Mobilfunkgebiet (nicht dargestellt) wechseln, müssen die Teilnehmerdaten von dem Heimatregister HLRB des Mobilfunkgebiets MFB zum dortigen Heimatregister übertragen werden. Nach Abschluß der Übertragung werden die Teilnehmerdaten im Heimatregister HLRB und im zuletzt aktuellen Besucherregister VLR1' gelöscht. Die bisher geltende Rufnummer des mobilen Teilnehmers wird in den Heimatregistern HLRA und HLRB inaktiv und die neue Rufnummer, unter der der mobile Teilnehmer im neuen Mobilfunkgebiet erreichbar ist, im dortigen Heimatregister und im Heimatregister HLRA als aktiv gekennzeichnet. Wenn der mobile Teilnehmer zurück zum Ursprungs-Mobilfunkgebiet MFA wechselt, wird in analoger Weise verfahren, wobei die im Heimatregister HLRA des Ursprungs-Mobilfunkgebiets MFA als inaktiv gekennzeichnete Rufnummer wieder aktiviert wird. Gleichzeitig wird die Rufnummer des mobilen Teilnehmers im zuletzt aktuellen Mobilfunkgebiet deaktiviert.

Im Heimatregister des Ursprungs-Mobilfunkgebiets ist also permanent die Rufnummer des eigenen und aller möglichen anderen Mobilfunkgebiete und in den Heimatregistern der anderen Mobilfunkgebiete die Rufnummer des eigenen und des Ursprungs-Mobilfunkgebietes gespeichert. Befindet sich der Teilnehmer im Ursprungs-Mobilfunkgebiet, so ist die zugehörige Rufnummer in allen Registern aktiv. Registriert der Teilnehmer in einem anderen Mobilfunkgebiet, so wird nur im dortigen Heimatregister und im Heimatregister des Ursprungs-Mobilfunkgebietes die Ursprungs-Rufnummer inaktiv und die Rufnummer des aktuellen Gebietes aktiv.

Die Mobilstation MS und die zugehörigen Teilnehmerdaten werden im jeweiligen Besucherregister erst registriert, sobald mit dem Besucherregister bzw. zuvor mit den Funkeinrichtungen der Funkzelle, in der sich der mobile Teilnehmer befindet, Kontakt aufgenommen wurde und die Teilnehmerdaten im Heimatregister des jeweiligen Mobilfunkgebiets gespeichert sind.

Der Wechsel des Heimatregisters bei Übertritt des mobilen Teilnehmers einschließlich seiner Mobilstation MS vom Ursprungs-Mobilfunkgebiet MFA zum Ziel-Mobilfunkgebiet MFB wird vom Teilnehmer selbst initiiert, indem eine Steuerungsinformation über die Mobilstation MS, das aktuelle Besucherregister VLR1' zum aktuellen Heimatregister HLRB und von dort über die Verbindung VAB zum Heimatregister HLRA des Ursprungs-Mobilfunkgebiets MFA übermittelt wird. Prinzipiell kann der Wechsel auch vom Ursprungs-Mobilfunkgebiet MFA oder jedem anderen aktuellen Mobilfunkgebiet aus initiiert werden. Sobald die Anforderung zum Heimatregister-Wechsel im ursprünglichen Heimatregister HLRA eintrifft, erfolgt unmittelbar danach oder zu einem gewünschten späteren Zeitpunkt die Datenübertragung zum neuen Heimatregister HLRB des Ziel-Mobilfunkgebiets MFB. Der Heimatregister-Wechsel kann vom mobilen Teilnehmer im einfachsten Fall auch über eine Telefon- oder Datenverbindung beim Betreiber des Mobilfunksystems im Mobilfunkgebiet MFA angefordert werden.

Durch die Kombination des bekannten Besucherregister-Wechsels mit dem neuen Heimatregister-Wechsel entsteht ein sehr flexibles Mobilfunksystem für Mobilfunkgebiete mit nicht zueinander kompatiblen Signalisierungsprotokollen. Bei den Mobilfunkgebieten MFA und MFB kann es sich um weit entfernte Länder oder sogar Kontinente - wie im vorliegenden Beispiel angegeben - handeln, zwischen denen der Heimatregister-Wechsel ohne Einhaltung von Echtzeitkriterien vollzogen werden kann. Innerhalb jedes Mobilfunkgebiets MFA, MFB wird die herkömmliche Methode des Besucherregister-Wechsels in Echtzeit beibehalten. Der Vorteil der Erfindung liegt im Zusammenschluß von Mobilfunkgebieten unterschiedlicher Signalisierungsprotokolle in ein- und demselben Mobilfunksystem. Jedoch ist auch die Kombination unterschiedlicher Systeme - z.B. analoger und digitaler Mobilfunksysteme - unter der Voraussetzung, daß die Struktur der Teilnehmerdaten und die angebotenen Teilnehmerdienste in den verschiedenen Systemen nahezu oder völlig identisch sind, durchführbar.

Die zwischen dem Ursprungs-Mobilfunkgebiet MFA und dem Ziel-Mobilfunkgebiet MFB sich bewegenden mobilen Teilnehmer können entweder im Heimatregister des Betreibers des Mobilfunksystems im jeweiligen Mobilfunkgebiet oder in einem von einem anderen Vertragspartner eingerichteten Heimatregister registriert werden. An jedes Heimatregister ist ein nicht dargestelltes Authentifikationszentrum angeschlossen, das aktuelle Authentifizierungsdaten in Form einer internationen mobilen Teilnehmerkennung, einer zeitweiligen Teilnehmeridentität, eines individuellen Teilnehmerschlüssels usw. enthält. Es ist im Mobilfunksystem möglich, den Heimatregister-Wechsel entweder nur ausgewählten mobilen Teilnehmern, die durch eine individuelle Subskription festgelegt werden, oder allen mobilen Teilnehmern generell zur Verfügung zu stellen.

Die mobilen Teilnehmer im Ziel-Mobilfunkgebiet sind entweder über die eigene Rufnummer im Ursprungs-Mobilfunkgebiet und zusätzlich über die unterschiedlichen Rufnummern in den verschiedenen anderen Mobilfunkgebieten erreichbar. Diese Rufnummern sind dabei im Heimatregister des Ursprungs-Mobilfunkgebiets als Teil der Teilnehmerdaten gespeichert. In den anderen Heimatregistern ist nur die Rufnummer des Ursprungs-Mobilfunkgebiets und des eigenen Mobilfunkgebiets gespeichert. Normalerweise reicht als wählbare Rufnummer diejenige des Ursprungs-Mobilfunkgebiets aus. Der Anruf wird dann grundsätzlich zuerst zum Ursprungs-Mobilfunkgebiet aufgebaut und nach Abfrage des dortigen Heimatregisters entweder direkt zum Teilnehmer im Ursprungs-Mobilfunkgebiet oder zum Ziel-Mobilfunkgebiet weitergeleitet.

Ist dem anrufenden mobilen Teilnehmer die Nummer des aktuellen Mobilfunkgebiets des angerufenen mobilen Teilnehmers bekannt und befinden sich beide mobile Teilnehmer in demselben Mobilfunkgebiet, so kann er durch die Rufnummer den Teilnehmer ohne Umweg über das Ursprungs-Mobilfunkgebiet auf direktem Weg erreichen. Das Ursprungs-Heimatregister kann auch die Heimatregister anderer Mobilfunkgebiete mit der Rufnummer des aktuellen Mobilfunkgebiets versorgen, indem die Rufnummer, die gleichzeitig zur Adressierung des jeweiligen Heimatregisters dient, über Datenverbindungen zwischen den jeweiligen Heimatregistern übertragen wird. Wählt der anrufende Teilnehmer jene Rufnummer des Mobilfunkteilnehmers, die im nächstgelegenen Mobilfunkgebiet Gültigkeit hat - z.B. im eigenen Land -, so wird der Anruf nach Abfrage des dortigen Heimatregisters immer direkt zum aktuellen Mobilfunkgebiet aufgebaut. Der anrufende Teilnehmer braucht in diesem Fall das aktuelle Mobilfunkgebiet des angerufenen Teilnehmers nicht zu kennen.

Wie bereits erwähnt, kann die Verbindung VAB zwischen dem Heimatregister HLRA des Ursprungs-Mobilfunkgebiets MFA und dem Heimatregister HLRB des Ziel-Mobilfunkgebiets MFB durch eine einfache X.25-Paketdatenverbindung realisiert werden. Jede andere Daten- oder Signalisierungsverbindung ist jedoch ebenso anwendbar. Es können auf der Verbindung VAB einige Steuerungsbefehle, die zwischen dem Besucherregister und dem Heimatregister bei der herkömmlichen Methode des Besucherregister-Wechsels bereits verwendet werden, eingesetzt werden. Beispiele für derartige Steuerungsbefehle sind "Daten eintragen" (Insert Subscriber Data), "Daten entfernen" (Delete Subscriber Data) "Löschung des kompletten Teilnehmerdatensatzes" (Cancel Location). Wenn ein eigenes Heimatregister im Ziel- Mobilfunkgebiet einmal installiert ist, kann dieses Register auch als Basis für "Roaming"-Funktionen mit anderen Betreibern von Mobilfunksystemen im jeweiligen Ziel-Mobilfunkgebiet verwendet werden.

Für den Fall, daß neben den Daten und Steuerinformationen, die für den bei einem Anruf durchzuführenden Verbindungsaufbau erforderlich sind, keine Zusatzinformationen - beispielsweise zur Nutzung von Zusatzdiensten durch die mobilen Teilnehmer - zwischen den Mobilfunkgebieten MFA, MFB auszutauschen sind, wird die Verbindung VAB zur Aktivierung und Deaktivierung der jeweiligen Rufnummer genutzt. Dasselbe gilt, wenn in den verschiedenen Mobilfunkgebieten MFA, MFB vollkommem unabhängige und damit unterschiedliche Diensteprofile vorhanden sind.

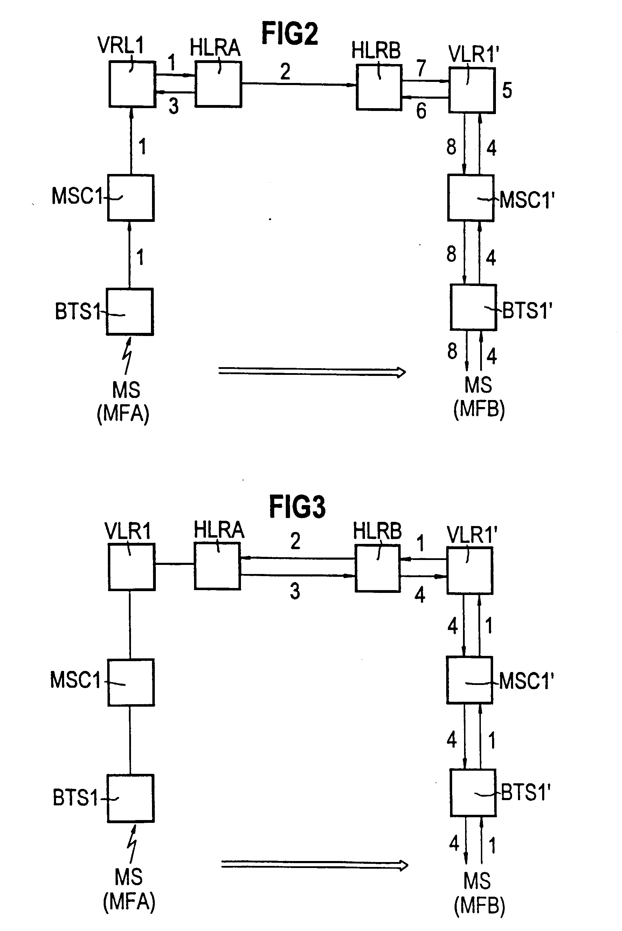

Figur 2 zeigt eine Prinzipdarstellung der bei einem Wechsel des mobilen Teilnehmers einschließlich seiner Mobilstation MS vom Mobilfunkgebiet MFA zum Mobilfunkgebiet MFB durchzuführenden Datenoperationen. Mit dem Wechsel des Mobilfunkgebiets geht ein Wechsel des Heimatregisters vom Heimatregister HLRA zum Heimatregister HLRB einher. Der Aufenthaltsort des mobilen Teilnehmers ändert sich vom lokalen Gebiet mit der Funkeinrichtung BTS1, dem Mobilvermittlungssystem MSC1 und dem zuständigen Besucherregister VLR1 im Mobilfunkgebiet MFA zum neuen lokalen Gebiet mit der Funkeinrichtung BTS1', dem Mobilvermittlungssystem MSC1' und dem aktuell zuständigen Besucherregister VLR1' im Mobilfunkgebiet MFB. Der Wechsel vom Heimatregister HLRA zum Heimatregister HLRB wird vom mobilen Teilnehmer selbst durch seine Mobilstation MS ausgelöst, indem eine Steuerungsinformation ausgesendet und durch die gemäß dem Aufenthaltsort des mobilen Teilnehmers im Mobilfunkgebiet MFA zuständigen Einrichtungen - Funkeinrichtung BTS1, Mobilvermittlungssystem MSC1 und aktuelles Besucherregister VLR1 - an das Heimatregister HLRA im Mobilfunkgebiet MFA weitergeleitet wird (1).

Die im Heimatregister HLRA gespeicherten Teilnehmerdaten werden zum neuen Heimatregister HLRB übertragen (2). Im Anschluß an die Teilnehmerdatenübertragung erfolgt im zuletzt zuständigen Besucherregister VLR1 des Mobilfunkgebiets MFA die Löschung der darin eingetragenen Teilnehmerdaten (3). Die Mobilstation MS wird im neuen Mobilfunkgebiet MFB in dem für den mobilen Teilnehmer jetzt zuständigen neuen Besucherregister VLR1' über die Funkeinrichtung BTS1' und das mit dem Besucherregister VLR1' verbundene Mobilvermittlungssystem MSC1' eingebucht (4).

Der mobile Teilnehmer identifiziert sich selbst durch eine ihm zugewiesene zeitweilige Teilnehmeridentität (Temporary Mobile Subscriber Identity, TSMI) und durch eine das lokale Gebiet und damit den Zuständigkeitsbereich des Besucherregisters festlegende Gebietsidentität (Local Area Identity, LAI). Der mobile Teilnehmer ist mit einer ihm zugewiesenen Teilnehmeridentifikationsnummer im Authentifikationszentrum registriert, das mit dem jeweiligen Heimatregister verbunden ist. Sobald der mobile Teilnehmer im Authentifikationszentrum bekannt ist, können die Teilnehmerdaten im Heimatregister eingetragen werden. Unabhängig davon, wo sich der mobile Teilnehmer aufhält, werden an seinem jeweiligen Aufenthaltsort seine Sicherheitsparameter benötigt. Daher sorgt das aktuelle Besucherregister dafür, daß diese Sicherheitsparameter über das Heimatregister vom Authentifikationszentrum besorgt werden. Damit die internationale Mobilteilnehmerkennung (International Mobile Subscriber Identity, IMSI) nicht bei jedem Zugang des Teilnehmers zum Mobilfunksystem neu übertragen werden muß, erhält der mobile Teilnehmer beim erstmaligen Einbuchen im Mobilfunksystem durch das aktuelle Besucherregister die zeitweilige Teilnehmeridentität. Aufgrund dieser zeitweiligen Teilnehmeridentität führt das aktuelle Besucherregister VLR1' die Authentifikation durch (5).

Das Besucherregister VLR1' fordert vom Heimatregister HLRB die Teilnehmerdaten unter Verwendung der internationen Mobilteilnehmerkennung an (6). Das Heimatregister HLRB sendet daraufhin die Teilnehmerdaten zum aktuell zuständigen Besucherregister VLR1' (7). Das Besucherregister VLR1' teilt dem mobilen Teilnehmer eine neue zeitweilige Teilnehmeridentität (TMSI) zu (8).

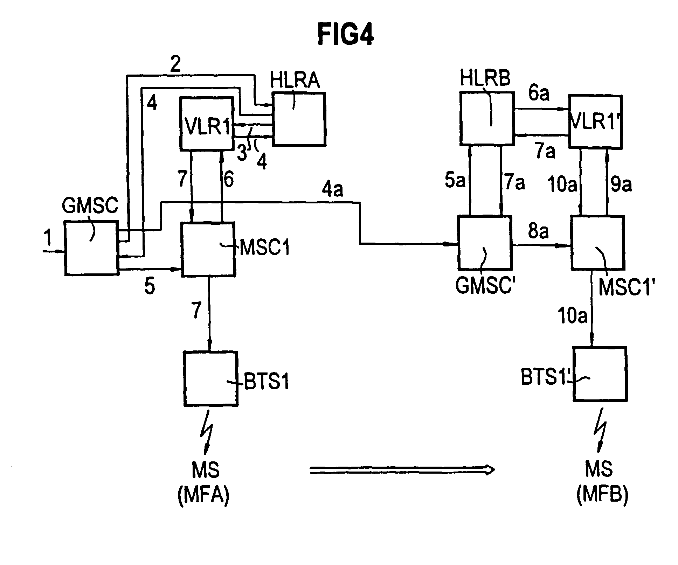

Figur 3 zeigt eine Prinzipdarstellung der Datenoperationen bei auftretenden Änderungen der Teilnehmerdaten für den Fall eines Heimatregister-Wechsels aufgrund des Übertritts des mobilen Teilnehmers einschließlich seiner Mobilstation MS vom Mobilfunkgebiet MFA in das Mobilfunkgebiet MFB. Eine Änderung der Teilnehmerdaten wird vom mobilen Teilnehmer durch seine Mobilstation MS vom aktuellen Heimatregister HLRB im Mobilfunkgebiet MFB angefordert. Dazu wird eine Steuerungsinformation über die jeweiligen Einrichtungen im zuständigen lokalen Gebiet - d.h. über die Funkeinrichtung BTS1', das Mobilvermittlungssystem MSC1' und das zuständige Besucherregister VLR1' - zum Heimatregister HLRB übertragen (1).

Diese Anforderung wird vom Heimatregister HLRB an das Heimatregister HLRA im ursprünglichen Mobilfunkgebiet MFA weitergeleitet (2). Dort werden die geänderten Teilnehmerdaten zunächst vom Heimatregister HLRA überprüft und darin eingetragen. Im Anschluß daran können die geänderten Teilnehmerdaten zum Heimatregister HLRB im neuen Mobilfunkgebiet MFB sofort oder zu einem gewünschten späteren Zeitpunkt rückübertragen und gespeichert werden (3). Ein Steuerungssignal, das die Annahme oder die Ablehnung der Anforderung kennzeichnet, wird in der Übertragungsrichtung zur Mobilstation MS hin vom Heimatregister HLRB über das Besucherregister VLR1', das Mobilvermittlungssystem MSC1' und die Funkeinrichtung BTS1' als Quittung der Anforderung rückübertragen (4). Dies ist erforderlich, um die Konsistenz der Daten im Mobilfunksystem mit mehreren Mobilfunkgebieten und darin angeordneten eigenen Heimatregistern sicherzustellen.

Figur 4 zeigt eine Prinzipdarstellung der Datenoperationen bei der Herstellung einer Verbindung für die beim mobilen Teilnehmer ankommenden Anrufe für den Fall eines Heimatregister-Wechsels bei Übertritt des mobilen Teilnehmers vom Mobilfunkgebiet MFA zum Mobilfunkgebiet MFB. Neben den in Figur 1 dargestellten Einrichtungen im Mobilfunkgebiet MFB - Funkeinrichtung BTS1', Mobilvermittlungssystem MSC1', Besucherregister VLR1' - und im Mobilfunkgebiet MFA - Funkeinrichtung BTS1, Mobilvermittlungssystem MSC1 und Besucherregister VLR1 - ist im Mobilfunkgebiet MFA ein gesondertes Mobilvermittlungssystem GMSC (Gateway Mobile Switching Center) zur Entgegennahme eines aus einem anderen Netz - z.B. dem öffentlichen Fernsprechnetz oder einem anderen Mobilfunknetz - eintreffenden Anrufs angeordnet.

Aufgrund der vom rufenden Teilnehmer gewählten Rufnummer wird der Anruf zunächst im ursprünglichen Mobilfunkgebiet MFA und dort von dem gesonderten Mobilvermittlungssystem GMSC entgegengenommen (1). Das Heimatregister HLRA des Mobilfunkgebiets MFA wird nach dem Aufenthaltsort des mobilen Teilnehmers anhand der Rufnummer abgefragt (2). Das Heimatregister HLRA sendet eine Anforderung an das Besucherregister VLR1, in dessen Zuständigkeitsbereich der angerufene mobile Teilnehmer sich derzeit befindet (3). Das Besucherregister VLR1 stellt den aktuellen Aufenthaltsort des mobilen Teilnehmers anhand der vom Heimatregister HLRA übermittelten Mobilteilnehmeridentität (International Mobile Subscriber Identity, IMSI) fest und sendet eine der Mobilstation des gerufenen mobilen Teilnehmers zugeordnete "Roaming"-Nummer (Mobile Station Roaming Number, MSRN) an das Heimatregister HLRA und von dort an das zusätzliche Mobilvermittlungssystem GMSC aus (4). Das gesonderte Mobilvermittlungssystem GMSC schaltet den Anruf zum Mobilvermittlungssystem MSC1 durch, das für den in seinem Zuständigkeitsbereich befindlichen mobilen Teilnehmer verantwortlich ist (5). Das Mobilvermittlungssystem MSC1 fordert vom zuständigen Besucherregister VLR1 die Teilnehmerdaten an (6), anhand der die Verbindung zum angerufenen mobilen Teilnehmer aufgebaut werden kann (7).

Wird festgestellt, daß der mobile Teilnehmer nicht im ursprünglichen Heimatregister HLRA registriert ist, übergibt das Heimatregister HLRA die Rufnummer des Mobilfunkgebiets MFB an das Mobilvermittlungssystem GMSC, das die Rufnummer an das zusätzliche Mobilvermittlungssytem GMSC' im neuen Mobilfunkgebiet MFB weiterleitet (4a). Das neue Heimatregister HLRB wird vom zusätzlichen Mobilvermittlungssytem GMSC' nach dem Aufenthaltsort des mobilen Teilnehmers abgefragt (5a). Daraufhin richtet das Heimatregister HLRB eine Anforderung an das neue Besucherregister VLR1', in dessen Zuständigkeitsbereich der mobile Teilnehmer sich befindet (6a), um von dort die der Mobilstation des gerufenen mobilen Teilnehmers zugeordnete "Roaming"-Numner (MSRN) zu erhalten (7a). Diese Nummer wird zum zusätzlichen Mobilvermittlungssystem GMSC' weitergeleitet, um den Anruf zum zuständigen Mobilvermittlungssystem MSC1' durchzuschalten (8a). Das Mobilvermittlungssystem MSC1' fordert vom Besucherregister VLR1' die Teilnehmerdaten an (9a), anhand der über die Funkeinrichtung BTS1' eine Verbindung unmittelbar zum mobilen Teilnehmer im Mobilfunkgebiet MFB aufgebaut wird (10a).

Der Verbindungsaufbau und -abbau zwischen dem Heimatregister und dem jeweiligen Besucherregister und der Austausch von Daten und Steuerungsinformationen über Mobilfunkgebietsgrenzen hinweg erfolgt ohne Anpassung der darin jeweils verwendeten Signalisierungsprotokolle, da die Mobilstation des mobilen Teilnehmers jeweils auf das aktuelle Heimatregister des Mobilfunkgebiets zugreifen kann. Die Mobilstation und die zugehörigen Teilnehmerdaten des mobilen Teilnehmers sind zu jedem Zeitpunkt nur in einem einzigen Heimatregister aktiv, nämlich in dem jeweils zuständigen Heimatregister des Mobilfunkgebiets, in dem sich der mobile Teilnehmer gerade befindet.

## Patentansprüche

1. Mobilfunksystem mit mindestens zwei Mobilfunkgebieten (MFA, MFB), in denen jeweils
- Mobilstationen (MS) von mobilen Teilnehmern Steuerungsinformationen und Daten senden und empfangen,
- die Mobilstationen (MS) beim Senden oder Empfangen mit Funkeinrichtungen (BTSl...BTSm, BTS1'...BTSm')eines Basisstationssystems über die Luftschnittstelle drahtlos verbunden sind,
- ein Heimatregister (HLRA, HLRB) zur Speicherung der für jeden im jeweiligen Mobilfunkgebiet (MFA, MFB) sich aufhaltenden mobilen Teilnehmer kennzeichnenden Teilnehmerdaten angeordnet ist,
- mit dem Heimatregister (HLRA, HLRB) mindestens ein Besucherregister (VLR1, VLR2; VLR1', VLR2') zur Speicherung der Teilnehmerdaten der in seinen Zuständigkeitsbereich eintretenden mobilen Teilnehmer verbunden ist,
**dadurch gekennzeichnet,**
- daß vor dem Übertritt der Mobilstation (MS) des mobilen Teilnehmers von einem Ursprungs-Mobilfunkgebiet (MFA) in ein Ziel-Mobilfunkgebiet (MFB) die im Heimatregister (HLRA) des Ursprungs-Mobilfunkgebiets (MFA) gespeicherten Teilnehmerdaten zum Heimatregister (HLRB) des Ziel-Mobilfunkgebiets (MFB) übertragen, darin gespeichert und danach im Heimatregister (HLRA) des Ursprungs-Mobilfunkgebiets (MFA) gelöscht werden, und
- daß sobald durch die Mobilstation (MS) des mobilen Teilnehmers eine Funkverbindung zu einer Funkeinrichtung (BTS1') des Ziel-Mobilfunkgebiets (MFB) hergestellt ist, das aktuelle Besucherregister (VLR1') die Teilnehmerdaten des in seinen Zuständigkeitsbereich eintretenden mobilen Teilnehmers vom Heimatregister (HLRB) des Ziel-Mobilfunkgebiets (MFB) erhält.

2. Mobilfunksystem nach Anspruch 1,
**dadurch gekennzeichnet,**
daß zwischen dem Heimatregister (HLRA) des Ursprungs-Mobilfunkgebiets (MFA) und dem Heimatregister (HLRB) des Ziel-Mobilfunkgebiets (MFB) jeweils eine leitungs- oder paketvermittelte Verbindung (VAB) oder eine Signalisierungsverbindung vorgesehen ist.

3. Mobilfunksystem nach Anspruch 1 oder 2,
**dadurch gekennzeichnet,**
daß vor Übertritt der Mobilstation (MS) des mobilen Teilnehmers vom Ursprungs-Mobilfunkgebiet (MFA) in das Ziel-Mobilfunkgebiet (MFB) der Wechsel vom alten Heimatregister (HLRA) zum neuen Heimatregister (HLRB) vom mobilen Teilnehmer selbst über eine Telefonverbindung oder eine Datenverbindung angefordert wird.

4. Mobilfunksystem nach Anspruch 3,
**dadurch gekennzeichnet,**
daß der Wechsel vom alten Heimatregister (HLRA) zum neuen Heimatregister (HLRB) vom mobilen Teilnehmer im Ursprungs-Mobilfunkgebiet (MFA) über seine Mobilstation (MS), das zuständige Besucherregister (VLR1) und das alte Heimatregister (HLRA) oder im Ziel-Mobilfunkgebiet (MFB) über seine Mobilstation (MS), das zuständige Besucherregister (VLR1'), das neue Heimatregister (HLRB), die zwischen den beiden Heimatregistern (HLRA, HLRB) verlaufende Verbindung (VAB) und das alte Heimatregister (HLRA) angefordert wird.

5. Mobilfunksystem nach einem der Ansprüche 2 bis 4,
**dadurch gekennzeichnet,**
daß jeweils eine zum Anrufaufbau gewählte Rufnummer über die zwischen dem alten Heimatregister (HLRA) und dem neuen Heimatregister (HLRB) verlaufende Verbindung (VAB) aktivierbar und deaktivierbar ist.

6. Mobilfunksystem nach einem der vorhergenden Ansprüche,
**dadurch gekennzeichnet,**
daß die Adresse des neuen Heimatregisters (HLRB) im Ziel-Mobilfunkgebiet (MFB) von dessen aktuellem Besucherregister (VLR1') durch Identifikation der in das Ziel-Mobilfunkgebiet (MFB) übergetretenen Mobilstation (MS) bereitgestellt wird.

7. Mobilfunksystem nach einem der vorhergenden Ansprüche,
**dadurch gekennzeichnet,**
daß geänderte Teilnehmerdaten zuerst in das Heimatregister (HLRA) des Ursprungs-Mobilfunkgebiets (MFA) eingetragen und danach zum Heimatregister (HLRB) des Ziel-Mobilfunkgebiets (MFB) gesendet werden.

8. Mobilfunksystem nach Anspruch 7,
**dadurch gekennzeichnet,**
daß eine Anforderung zur Änderung der Teilnehmerdaten im Heimatregister (HLRB) des Ziel-Mobilfunkgebiets (MFB) an das Heimatregister (HLRA) des Ursprungs-Mobilfunkgebiets (MFA) weitergeleitet und dort die Änderung überprüft wird, und daß ein die Ablehnung oder die Annahme der Anforderung kennzeichnendes Steuersignal zur Mobilstation (MS) rückgesendet wird.

9. Mobilfunksystem nach einem der vorhergenden Ansprüche,
**dadurch gekennzeichnet,**
daß im Heimatregister (HLRA) des Ursprungs-Mobilfunkgebiets (MFA) Rufnummern des mobilen Teilnehmers für das Ursprungs-Mobilfunkgebiet und für die anderen Mobilfunkgebiete und in den Heimatregistern der anderen Mobilfunkgebiete jeweils die Rufnummer für das Ursprungs-Mobilfunkgebiet (MFA) und die Rufnummer für das eigene Mobilfunkgebiets als Teil der Teilnehmerdaten zum Anrufaufbau gespeichert sind.

10. Mobilfunksystem nach Anspruch 9,
**dadurch gekennzeichnet,**
daß bei dem Wechsel von dem Ursprungs-Mobilfunkgebiet (MFA) in das Ziel-Mobilfunkgebiet (MFB) eine ursprüngliche Rufnummer, unter der der mobile Teilnehmer im Ursprungs-Mobilfunkgebiet (MFA) erreichbar war, im zugehörigen Heimatregister (HLRA) inaktiv gesetzt und eine neue Rufnummer, unter der der mobile Teilnehmer im Ziel-Mobilfunkgebiet (MFB) aktuell erreichbar ist, im zugehörigen Heimatregister (HLRB) aktiv gesetzt wird.

11. Mobilfunksystem nach Anspruch 9 oder 10,
**dadurch gekennzeichnet,**
daß ein Anruf mit der von dem anrufenden Teilnehmer gewählten Rufnummer für das Ursprungs-Mobilfunkgebiet (MFA) zuerst zum Ursprungs-Mobilfunkgebiet (MFA) aufgebaut und nach Abfrage des zugehörigen Heimatregisters (HLRA) direkt zum angerufenen mobilen Teilnehmer im Ursprungs-Mobilfunkgebiet (MFA) oder im Ziel-Mobilfunkgebiet (MFB) weitergeleitet wird.

12. Mobilfunksystem nach Anspruch 11,
**dadurch gekennzeichnet,**
daß bei Anwesenheit des angerufenen Teilnehmers im Ursprungs-Mobilfunkgebiet (MFA) von dessen Heimatregister (HLRA) die Adresse des aktuellen Besucherregisters (VLR1) im Ursprungs-Mobilfunkgebiet (MFA) bereitgestellt wird, während bei Anwesenheit des gerufenen Teilnehmers im Ziel-Mobilfunkgebiet (MFB) vom Heimatregister (HLRA) des Ursprungs-Mobilfunkgebiets (MFA) die neue Rufnummer bereitgestellt und eine Verbindung zu einem gesonderten Mobilvermittlungssystem (GMSC') des Ziel-Mobilfunkgebiets (MFB) hergestellt wird, das die Adresse des aktuellen Besucherregisters (VLR1') im Ziel-Mobilfunkgebiet (MFB) vom aktuellen Heimatregister (HLRB) anfordert und daß anhand der bereitgestellten Adresse der Anruf zum aktuellen Besucherregister (VLR1') aufgebaut wird.

13. Mobilfunksystem nach Anspruch 9,
**dadurch gekennzeichnet,**
daß von dem Heimatregister des Ursprungs-Mobilfunkgebiets (MFA) die Rufnummer des aktuellen Mobilfunkgebiets zu den Heimatregistern der anderen Mobilfunkgebiete (MFB) übertragen und darin gespeichert wird, und daß ein Anruf mit der von dem anrufenden Teilnehmer gewählten Rufnummer des nächstgelegenen Mobilfunkgebiets nach Abfrage des zugehörigen Heimatregisters direkt zum angerufenen mobilen Teilnehmer im aktuellen Mobilfunkgebiet aufgebaut wird.

14. Mobilfunksystem nach Anspruch 9,
**dadurch gekennzeichnet,**
daß bei Aufenthalt des anrufenden mobilen Teilnehmers im Ziel-Mobilfunkgebiet (MFB) der Anruf mit der von dem anrufenden mobilen Teilnehmer gewählten Rufnummer des Ziel-Mobilfunkgebiets (MFB) direkt im Ziel-Mobilfunkgebiet (MFB) an den angerufenen mobilen Teilnehmer weitergeleitet wird.

15. Mobilfunksystem nach einem der vorhergehenden Ansprüche,
**dadurch gekennzeichnet,**
daß in den Mobilfunkgebieten (MFA, MFB) verschiedene, bezüglich der Teilnehmerdaten und der den mobilen Teilnehmern zur Verfügung stehenden Teilnehmerdienste zueinander kompatible Mobilfunksyteme mit inkompatiblen Signalisierungsprotokollen zur Übertragung der Daten und Steuerungsinformationen verwendet werden.

## Claims

1. Mobile radio system having at least two mobile radio regions (MFA, MFB) in which in each case
- mobile stations (MS) of mobile subscribers transmit and receive control information and data,
- during transmission or reception, the mobile stations (MS) are connected in a wire-free manner via the air interface to radio devices (BTS1... BTSm, BTS1'... BTSm') of a base station system,
- a home register (HLRA, HLRB) for storage of the subscriber data which is characteristic for each mobile subscriber located is arranged in the respective mobile radio region (MFA, MFB),
- at least one visitor register (VLR1, VLR2; VLR1', VLR2') is connected to the home register (HLRA, HLRB) for storage of the subscriber data of the mobile subscribers who enter its responsibility area,
- characterized in that before the transfer of the mobile station (MS) of the mobile subscriber from an originating mobile radio region (MFA) to a destination mobile radio region (MFB), the subscriber data which are stored in the home register (HLRA) of the originating mobile radio region (MFA) are transmitted to the home register (HLRB) of the destination mobile radio region (MFB), are stored therein, and are then deleted in the home register (HLRA) of the originating mobile radio region (MFA), and
- in that as soon as a radio link is produced by the mobile station (MS) of the mobile subscriber to a radio device (BTS1') of the destination mobile radio region (MFB), the current visitor register (VLR1') receives from the home register (HLRB) of the destination mobile radio region (MFB) the subscriber data of the mobile subscriber who is entering its responsibility area.

2. Mobile radio system according to Claim 1,
characterized
in that a line-switched or packet-switched link (VAB) or a signalling link is in each case provided between the home register (HLRA) of the originating mobile radio region (MFA) and the home register (HLRB) of the destination mobile radio region (MFB).

3. Mobile radio system according to Claim 1 or 2,
characterized
in that, before the transfer of the mobile station (MS) of the mobile subscriber from the originating mobile radio region (MFA) to the destination mobile radio region (MFB), the change from the old home register (HLRA) to the new home register (HLRB) is requested by the mobile subscriber himself via a telephone link or a data link.

4. Mobile radio system according to Claim 3,
characterized
in that the change from the old home register (HLRA) to the new home register (HLRB) is requested by the mobile subscriber in the originating mobile radio region (MFA) via his mobile station (MS), the responsible visitor register (VLR1) and the old home register (HLRA) or, in the destination mobile radio region (MFB), via his mobile station (MS), the responsible visitor register (VLR1'), the new home register (HLRB), the link (VAB) running between the two home registers (HLRA, HLRB) and the old home register (HLRA).

5. Mobile radio system according to one of Claims 2 to 4,
characterized
in that a subscriber number which is dialled to set up a call can in each case be activated and deactivated via the link (VAB) running between the old home register (HLRA) and the new home register (HLRB).

6. Mobile radio system according to one of the preceding claims,
characterized
in that the address of the new home register (HLRB) in the destination mobile radio region (MFB) is provided by its current visitor register (VLR1') by identification of the mobile station (MS) which is being transferred to the destination mobile radio region (MFB).

7. Mobile radio system according to one of the preceding claims,
characterized
in that changed subscriber data are first entered in the home register (HLRA) of the originating mobile radio region (MFA) and are then transmitted to the home register (HLRB) of the destination mobile radio region (MFB).

8. Mobile radio system according to Claim 7,
characterized
in that a request to change the subscriber data in the home register (HLRB) of the destination mobile radio region (MFB) is passed on to the home register (HLRA) of the originating mobile radio region (MFA) and the change is checked there, and in that a control signal which characterizes the rejection or the acceptance of the request is transmitted back to the mobile station (MS).

9. Mobile radio system according to one of the preceding claims,
characterized
in that subscriber numbers of the mobile subscriber for the originating mobile radio region and for the other mobile radio regions are stored in the home register (HLRA) of the originating mobile radio region (MFA), and the subscriber number for the originating mobile radio region (MFA) and the subscriber number for the home mobile radio region are in each case stored in the home registers of the other mobile radio regions as part of the subscriber data for setting up a call.

10. Mobile radio system according to Claim 9,
characterized
in that, during the change from the originating mobile radio region (MFA) to the destination mobile radio region (MFB), an original subscriber number, via which it was possible to access the mobile subscriber in the originating mobile radio region (MFA), is set to be inactive in the associated home register (HLRA), and a new subscriber number, via which it is currently possible to access the mobile subscriber in the destination mobile radio region (MFB), is set to be active in the associated home register (HLRB).

11. Mobile radio system according to Claim 9 or 10,
characterized
in that a call using the subscriber number for the originating mobile radio region (MFA) dialled by the calling subscriber is first set up to the originating mobile radio region (MFA) and, after interrogation of the associated home register (HLRA), is passed on directly to the called mobile subscriber in the originating mobile radio region (MFA) or in the destination mobile radio region (MFB).

12. Mobile radio system according to Claim 11,
characterized
in that, if the called subscriber is present in the originating mobile radio region (MFA), the address of the current visitor register (VLR1) is provided by his home register in the originating mobile radio region (MFA), while, if the called subscriber is present in the destination mobile radio region (MFB), the new subscriber number is provided by the home register (HLRA) of the originating mobile radio region (MFA) and a link is produced to a separate mobile switching system (GMSC') of the destination mobile radio region (MFB), which system requests from the current home register (HLRB) the address of the current visitor register (VLR1') in the destination mobile radio region (MFB), and in that the call to the current visitor register (VLR1') is set up using the address provided.

13. Mobile radio system according to Claim 9,
characterized
in that the subscriber number of the current mobile radio region is transmitted from the home register of the originating mobile radio region (MFA) to the home registers of the other mobile radio regions (MFB) and is stored therein, and in that a call is set up directly to the called mobile subscriber in the current mobile radio region, using the subscriber number dialled by the calling subscriber for the closest mobile radio region, after interrogation of the associated home register.

14. Mobile radio system according to Claim 9,
characterized
in that, if the calling mobile subscriber is present in the destination mobile radio region (MFB), the call is passed on directly in the destination mobile radio region (MFB) to the called mobile subscriber, using the subscriber number of the destination mobile radio region (MFB) dialled by the calling mobile subscriber.

15. Mobile radio system according to one of the preceding claims,
characterized
in that various mobile radio systems, which are compatible with one another in terms of the subscriber data and the subscriber services which are available to the mobile subscribers, are used with incompatible signalling protocols for the transmission of data and control information in the mobile radio regions (MFA, MFB).

## Revendications

1. Système de radiocommunication mobile avec au moins deux régions de radiocommunication mobile (MFA, MFB) dans chacune desquelles
- des stations mobiles (MS) d'abonnés mobiles émettent et reçoivent des informations de commande et des données,
- lors de l'émission ou de la réception, les stations mobiles (MS) sont reliées sans fil, par l'intermédiaire de l'interface radio, à des installations radios (BTS1 à BTSm, BTSl' à BTSm') d'un système de stations de base,
- il est prévu un enregistreur de localisation nominal (HLRA, HLRB) qui est destiné à la mémorisation des données d'abonné caractérisant chaque abonné mobile séjournant dans la région de radiocommunication mobile (MFA, MFB) considérée,
- l'enregistreur de localisation nominal (HLRA, HLRB) est relié à au moins un enregistreur de localisation visité (VLR1, VLR2 ; VLRl', VLR2') qui est destiné à la mémorisation des données des abonnés mobiles entrant dans sa zone de compétence,
caractérisé par le fait que
- avant le passage de la station mobile (MS) de l'abonné mobile d'une région de radiocommunication mobile (MFA) d'origine à une région de radiocommunication mobile (MFB) de destination, les données d'abonné mémorisées dans l'enregistreur de localisation nominal (HLRA) de la région de radiocommunication mobile (MFA) d'origine sont transmises à l'enregistreur de localisation nominal (HLRB) dans la région de radiocommunication mobile (MFB) de destination, y sont mémorisées et sont ensuite effacées dans l'enregistreur de localisation nominal (HLRA) de la région de radiocommunication mobile (MFA) d'origine, et
- dès qu'une liaison radio a été établie par la station mobile (MS) de l'abonné mobile vers une installation radio (BTSl') de la région de radiocommunication mobile (MFB) de destination, l'enregistreur de localisation visité (VLRl') courant reçoit de l'enregistreur de localisation nominal (HLRB) de la région de radiocommunication mobile (MFB) de destination les données de l'abonné mobile entrant dans sa zone de compétence.

2. Système de radiocommunication mobile selon la revendication 1,
caractérisé par le fait que
entre l'enregistreur de localisation nominal (HLRA) de la région de radiocommunication mobile (MFA) d'origine et l'enregistreur de localisation nominal (HLRB) de la région de radiocommunication mobile (MFB) de destination, il est prévu à chaque fois une liaison à commutation de circuits ou à commutation par paquets (VAB) ou une liaison par sémaphores.

3. Système de radiocommunication mobile selon la revendication 1 ou 2,
caractérisé par le fait que
avant le passage de la station mobile (MS) de l'abonné mobile de la région de radiocommunication mobile (MFA) d'origine à la région de radiocommunication mobile (MFB) de destination, le changement de l'ancien enregistreur de localisation nominal (HLRA) au nouvel enregistreur de localisation nominal (HLRB) est demandé par l'abonné mobile lui-même au moyen d'une liaison téléphonique ou d'une liaison de données.

4. Système de radiocommunication mobile selon la revendication 3,
caractérisé par le fait que
le changement de l'ancien enregistreur de localisation nominal (HLRA) au nouvel enregistreur de localisation nominal (HLRB) est demandé par l'abonné mobile soit dans la région de radiocommunication mobile (MFA) d'origine par l'intermédiaire de sa station mobile (MS), de l'enregistreur de localisation visité (VLR1) compétent et de l'ancien enregistreur de localisation nominal (HLRA), soit dans la région de radiocommunication mobile (MFB) de destination par l'intermédiaire de sa station mobile (MS), de l'enregistreur de localisation visité (VLRl') compétent, du nouvel enregistreur de localisation nominal (HLRB), de la liaison (VAB) s'étendant entre les deux enregistreurs de localisation nominaux (HLRA, HLRB), et de l'ancien enregistreur ce localisation nominal (HLRA).

5. Système de radiocommunication mobile selon l'une des revendications 2 à 4,
caractérisé par le fait que
à chaque fois, un numéro d'appel composé pour l'établissement d'une communication peut être activé et désactivé par l'intermédiaire de la liaison (VAB) s'étendant entre l'ancien enregistreur de localisation nominal (HLRA) et le nouvel enregistreur de localisation nominal (HLRB).

6. Système de radiocommunication mobile selon l'une des revendications précédentes,
caractérisé par le fait que
l'adresse du nouvel enregistreur de localisation nominal (HLRB) dans la région de radiocommunication mobile (MFB) de destination est fournie par son enregistreur de localisation visité (VLR1') courant au moyen de l'identification de la station mobile (MS) qui est passée dans la région de radiocommunication mobile (MFB) de destination.

7. Système de radiocommunication mobile selon l'une des revendications précédentes,
caractérisé par le fait que
des données d'abonné modifiées sont enregistrées d'abord dans l'enregistreur de localisation nominal (HLRA) de la région de radiocommunication mobile (MFA) d'origine et sont ensuite envoyées à l'enregistreur de localisation nominal (HLRB) de la région de radiocommunication mobile (MFB) de destination.

8. Système de radiocommunication mobile selon la revendication 7,
caractérisé par le fait que
une demande pour la modification des données d'abonné dans l'enregistreur de localisation nominal (HLRB) de la région de radiocommunication mobile (MFB) de destination est retransmise à l'enregistreur de localisation nominal (HLRA) de la région de radiocommunication mobile (MFA) d'origine, où la modification est contrôlée, et qu'un signal de commande caractérisant l'acceptation ou le rejet de la demande est renvoyé à la station mobile (MS).

9. Système de radiocommunication mobile selon l'une des revendications précédentes,
caractérisé par le fait que
l'enregistreur de localisation nominal (HLRA) de la région de radiocommunication mobile (MFA) d'origine mémorise des numéros d'appel de l'abonné mobile pour la région de radiocommunication mobile d'origine et pour les autres régions de radiocommunication mobile et les enregistreurs de localisation nominaux des autres régions de radiocommunication mobile mémorisent comme partie des données d'abonné pour l'établissement de communications à chaque fois le numéro d'appel pour la région de radiocommunication mobile (MFA) d'origine et le numéro d'appel pour la région de radiocommunication mobile considérée.

10. Système de radiocommunication mobile selon la revendication 9,
caractérisé par le fait que
lors du changement de la région de radiocommunication mobile (MFA) d'origine à la région de radiocommunication mobile (MFB) de destination, un numéro d'appel initial, auquel l'abonné mobile pouvait être joint dans la région de radiocommunication mobile (MFA) d'origine, est caractérisé comme inactif dans l'enregistreur de localisation nominal (HLRA) associé et un nouveau numéro d'appel, auquel l'abonné mobile peut être joint actuellement dans la région de radiocommunication mobile (MFB) de destination, est caractérisé comme actif dans l'enregistreur de localisation nominal (HLRB) associé.

11. Système de radiocommunication mobile selon la revendication 9 ou 10,
caractérisé par le fait que
une communication utilisant le numéro d'appel composé par l'abonné appelant pour la région de radiocommunication mobile (MFA) d'origine est d'abord établie vers la région de radiocommunication mobile (MFA) d'origine et, après l'interrogation de l'enregistreur de localisation nominal (HLRA) associé, est retransmise directement à l'abonné mobile appelé dans la région de radiocommunication mobile (MFA) d'origine ou dans la région de radiocommunication mobile (MFB) de destination.

12. Système de radiocommunication mobile selon la revendication 11,
caractérisé par le fait que
lorsque l'abonné appelé est présent dans la région de radiocommunication mobile (MFA) d'origine, son enregistreur de localisation nominal (HLRA) fournit l'adresse de l'enregistreur de localisation visité (VLR1) courant dans la région de radiocommunication mobile (MFA) d'origine tandis que, lorsque l'abonné appelé est présent dans la région de radiocommunication mobile (MFB) de destination, l'enregistreur de localisation nominal (HLRA) de la région de radiocommunication mobile (MFA) d'origine fournit le nouveau numéro et une liaison est établie vers un centre de commutation de service mobile spécial (GMSC') de la région de radiocommunication mobile (MFB) de destination, lequel centre demande l'adresse de l'enregistreur de localisation visité (VLR1') courant dans la région de radiocommunication mobile (MFB) de destination à l'enregistreur de localisation nominal (HLRB) courant, et que la communication est établie vers l'enregistreur de localisation visité (VLRl') courant à l'aide de l'adresse fournie.

13. Système de radiocommunication mobile selon la revendication 9,
caractérisé par le fait que
le numéro d'appel de la région de radiocommunication mobile courante est transmis de l'enregistreur de localisation nominal de la région de radiocommunication mobile (MFA) d'origine aux enregistreurs de localisation nominaux des autres régions de radiocommunication mobile (MFB) et y est mémorisé, et qu'une communication utilisant le numéro d'appel, composé par l'abonné appelant, de la plus proche région de radiocommunication mobile est établie après l'interrogation de l'enregistreur de localisation nominal associé directement vers l'abonné mobile appelé dans la région de radiocommunication mobile courante.

14. Système de radiocommunication mobile selon la revendication 9,
caractérisé par le fait que
lors du séjour de l'abonné mobile appelant dans la région de radiocommunication mobile (MFB) de destination, la communication utilisant le numéro d'appel, composé par l'abonné mobile appelant, de la région de radiocommunication mobile (MFB) de destination est retransmise directement dans la région de radiocommunication mobile (MFB) de destination à l'abonné mobile appelé.

15. Système de radiocommunication mobile selon l'une des revendications précédentes,
caractérisé par le fait que
dans les régions de radiocommunication mobile (MFA, MFB), on utilise pour la transmission des données et des informations de commande divers systèmes de radiocommunication mobile compatibles les uns aux autres quant aux données d'abonnés et aux services offerts aux abonnés mobiles mais ayant des protocoles de signalisation incompatibles.
